# FASCICULE DE BREVET EUROPEEN

(11) **EP 1 692 354 B1**
(45) Date de publication et mention de la délivrance du brevet: **25.04.2007**
(21) Numéro de dépôt: 04805650.1
(22) Date de dépôt: 07.12.2004
(51) Int. Cl.: E04F 19/04, H02G 3/04

(54) **DISPOSITIF DE FINITION DEMONTABLE, EN PARTICULIER PLINTHE OU MOULURE**
ABMONTIERBARE DECKVORRICHTUNG, INSBESONDERE EINE FUSSLEISTE ODER EIN ZIERPROFIL
DETACHABLE FINISHING DEVICE, PARTICULARLY A SKIRTING BOARD OR MOULDING

(30) Priorité: 08.12.2003 FR 0314333
(43) Date de publication de la demande: 23.08.2006
(73) Titulaire: Depro France, 59280 Armentières (FR)
(72) Inventeur: PROOT, Bernard, 59290 Wasquehal (FR)
(74) Mandataire: Matkowska, Franck
(86) Numéro de dépôt international: PCT/FR2004/003134
(87) Numéro de publication internationale: WO 2005/056951

(56) Documents cités:
- EP-A- 0 913 540
- EP-A- 1 085 144
- DE-U1- 20 312 699

## Description

### Domaine technique

La présente concerne une nouvelle structure pour un dispositif de finition démontable, du type comportant un élément décoratif de façade monté de manière amovible sur un support. Elle concerne plus particulièrement une nouvelle structure de plinthe ou moulure démontable.

### Art antérieur

Dans le cadre de la rénovation des bâtiments, il est usuel de procéder au changement de revêtement de sol ou de mur, à la modification ou l'installation d'un réseau de fils et/ou de câbles domotiques et/ou électriques, au masquage et au recouvrement d'anciennes plinthes. Ces opérations obligent, d'une part à arracher les plinthes d'origine qui sont clouées et/ou collées au bas des murs, puis d'autre part, à utiliser des plinthes conçues pour ces utilisations, mais qui sont différentes en terme de forme, de taille, ce qui ne permet pas d'avoir une cohérence esthétique.

On a déjà proposé à ce jour des plinthes démontables, par exemple dans la demande de brevet français FR 2 718 478. La plinthe démontable comporte un support qui est destiné à être fixé au bas d'un mur, et sur le lequel vient s'emboîter de manière amovible un élément décoratif qui forme la partie apparente de la plinthe. De manière avantageuse, l'élément décoratif de façade peut être réalisé dans un matériau usinable, tel que par exemple du bois, ou des panneaux à base de fibre de bois. Il est donc possible de réaliser des éléments décoratifs présentant une meilleure qualité esthétique, comparativement par exemple à des éléments de façade en plastique type PVC, réalisés par moulage ou extrusion.

La plinthe démontable du document FR 2 718 478 présente toutefois plusieurs inconvénients.

La mise en place de l'élément décoratif sur le support se fait par simple emboîtement vertical. A l'inverse, le démontage de l'élément décoratif est obtenu par simple soulèvement, le support ne comportant aucun moyen pour le blocage en translation de l'élément décoratif dans son plan d'emboîtement. Il en résulte de manière préjudiciable (1^{er} inconvénient) une trop grande facilité de déboîtement de l'élément décoratif, aucun moyen de verrouillage ne protégeant la plinthe contre des déboîtements intempestifs. Ainsi, en cas par exemple d'imperfections ou d'irrégularités dans le sol ou dans le revêtement de sol, il arrive fréquemment que l'élément décoratif ne soit pas parfaitement en place et emboîté sur le support.

Un deuxième inconvénient de la plinthe du document FR 2 718 478 réside dans l'impossibilité de dissimuler le passage de fils électriques.

On a proposé dans la demande de brevet européen EP 1 085144 une plinthe qui constitue un perfectionnement de la plinthe décrite dans le document FR 2 718 478, en ce qu'elle comporte un moyen de verrouillage du type butée en saillie réalisée dans le support (respectivement dans l'élément décoratif) et coopérant avec une rainure longitudinale réalisée dans l'élément décoratif (respectivement dans le support) pour le blocage en translation de l'élément décoratif dans son plan d'emboîtement. Il est également enseigné dans ce document de prévoir une goulotte additionnelle qui est par exemple insérée dans une rainure du support, et qui permet le passage de fils ou câbles électriques.

Dans la plinthe du document EP 1 085 144, les risques de déboîtements intempestifs de l'élément décoratif sont plus faibles que pour la plinthe du document FR 2 718 478, mais ne sont pas totalement supprimés, car il subsiste en pratique un risque de désengagement des moyens de verrouillage (butée/rainure) en tirant sur la plinthe au niveau de son bord inférieur. Egalement, pour rendre l'élément décoratif démontable, il est préférable et préconisé de prévoir un espace libre entre le bord inférieur de l'élément décoratif et le sol (voir notamment figures 7 et 8 de EP 1 085 144). Cet espace libre entre le sol et la plinthe contribue à augmenter le risque de déboîtement de l'élément décoratif de la plinthe, et surtout peut de manière préjudiciable facilement s'encrasser, tout en étant difficilement accessible pour son nettoyage.

Enfin, un inconvénient supplémentaire de certaines réalisations décrites dans la publication EP 1 085 144, tel que par exemple la réalisation de la figure 8, réside dans la complexité de la fabrication par usinage de l'élément décoratif. En effet, il n'est pas possible de fabriquer l'élément décoratif par un usinage simple du type fraisage, du fait notamment de la présence de la butée de blocage en saillie sur la face arrière de l'élément décoratif. Dans cette réalisation, la présence de cette butée sur l'élément décoratif oblige à réaliser des opérations de défonçage plus coûteuses.

Au surplus, les plinthes décrites dans les publications précitées ne sont pas adaptées pour réaliser des moulures décoratives démontables destinées à être fixées à cheval sur un plafond et le haut d'un mur.

On a par ailleurs proposé dans diverses publications, et notamment dans les demandes de brevet français FR 2 063 373, FR 1 469 175 et FR 2 080 558, des plinthes cache-fils démontables en deux parties (élément de façade amovible/ support fixe). Cependant dans ces publications, la géométrie de l'élément de façade amovible est complexe, et ces éléments de façade sont en pratique nécessairement constitués par des profilés en plastique type PVC, qui sont obtenus par moulage ou extrusion, et dont les qualités esthétiques sont faibles. Ces éléments de façade ne sont pas des pièces usinées, et en particulier ne peuvent pas être des pièces en bois, ou à base de fibres de bois.

### Objectif(s) de l'invention

L'invention a pour objectif principal et général de proposer une nouvelle structure pour dispositif de finition démontable du type plinthe ou moulure, comportant un élément décoratif emboîté de manière amovible sur un support qui est destiné à être fixé directement ou indirectement sur une structure porteuse, tel que par exemple un mur et/ou un plafond.

Un autre objectif secondaire de l'invention est de proposer une nouvelle structure pour un dispositif de finition démontable du type plinthe ou moulure, qui permet un montage et un démontage aisés de l'élément décoratif de façade, tout en palliant les inconvénients précités des plinthes décrites dans les documents FR 2 718 478 et EP 1 085 144, et notamment qui offre une meilleure sécurité contre le déboîtement accidentel de l'élément décoratif.

Un autre objectif secondaire de l'invention est de proposer une nouvelle structure de dispositif de finition démontable, dont l'élément décoratif peut être réalisé par usinage simple d'une pièce, notamment en mettant en oeuvre des techniques usuelles et simples d'enlèvement de matière, et plus particulièrement dont l'élément décoratif peut être réalisé dans des matières usinables plus nobles que le plastique et présentant une qualité esthétique supérieure tel que par exemple le bois, les pièces à base de fibres de bois, les matériaux synthétiques durs tels que par exemple le matériau à base de minéraux synthétiques et de polymères acryliques commercialisé sous la marque CORIAN®.

Un autre objectif secondaire de l'invention est de proposer une nouvelle structure pour un dispositif de finition démontable qui puisse s'adapter à la réalisation aussi bien d'une plinthe ou d'une moulure de plafond.

Un autre objectif secondaire de l'invention est de proposer une nouvelle structure pour un dispositif de finition démontable qui permet de servir de cache-fils.

### Résumé de l'invention

Tout ou partie des objectifs précités, dont au moins l'objectif principal et général précité, sont atteints par l'invention qui a pour objet un nouveau dispositif de finition démontable, et plus particulièrement une plinthe ou moulure démontable.

Le dispositif de finition démontable de l'invention est connu, notamment de la réalisation décrite dans le document EP 1 085 144, en ce qu'il comporte les caractéristiques techniques suivantes.

Le dispositif de finition démontable comporte un support et un élément décoratif linéaire, qui est conçu pour être emboîté de manière amovible sur le support selon un plan d'emboîtement/déboîtement, et qui une fois emboîté sur le support forme la façade apparente du dispositif, le support comportant une butée qui est transversale au plan d'emboîtement/déboîtement, et qui est destinée à coopérer avec une rainure longitudinale de l'élément décoratif, en sorte de bloquer en translation l'élément décoratif dans sa direction de déboîtement.

De manière caractéristique selon l'invention, le support comporte en outre :
- au niveau de sa base, au moins un élément de jonction par emboîtement de type mâle,
- en partie supérieure, au moins un élément de verrouillage formant une butée.

L'élément décoratif comporte :
- au niveau de sa base, une rainure inférieure longitudinale conçue pour coopérer avec chaque élément de jonction par emboîtement de type mâle, ladite rainure inférieure et chaque élément de jonction permettant un emboîtement/déboîtement de la base de l'élément décoratif sur le support uniquement par déplacement en translation de l'élément décoratif sensiblement selon le plan d'emboîtement/déboîtement,
- en face arrière, un évidement comportant dans sa partie supérieure une rainure supérieure longitudinale, qui présente la même orientation que la rainure intérieure (1a), et qui est conçue pour coopérer avec la butée de chaque élément de verrouillage, ladite butée de l'élément de verrouillage étant apte à être positionnée dans la rainure supérieure par déplacement de l'élément décoratif transversalement au plan d'emboîtement/déboîtement.

### Brève description des figures

D'autres caractéristiques et avantages de l'invention apparaîtront plus clairement à la lecture de la description détaillée ci-après de plusieurs variantes de réalisation et de mise en oeuvre d'une plinthe et d'une moulure démontables conformes à l'invention, laquelle description détaillée est donnée à titre d'exemple non limitatif et non exhaustif de l'invention, et en référence aux dessins annexés sur lesquels :
- la figure 1 représente la coupe de l'élément décoratif commun d'une plinthe de l'invention ;
- les figures 2, 3 et 4 représentent respectivement les coupes de trois supports de plinthe différents sur lesquels l'élément décoratif de la figure 1 peut être monté,
- les figures 5, 6 et 7 représentent en vue de coupe, l'élément décoratif de la figure 1 emboîté sur chaque support respectivement des figures 2, 3 et 4 ;
- la figure 8 représente, un outil spécifique permettant de désengager élastiquement l'élément décoratif du support de la plinthe ;
- la figure 9 représente une coupe d'une variante de réalisation d'un support pour moulure, de type cache-fils, et adapté pour les plafond,
- la figure 10 représente une coupe de l'élément décoratif de la figure 1 emboîté sur le support de la figure 10 en sorte de constituer une moulure cache-fils pour plafond,
- la figure 11 est une perspective d'une autre variante de réalisation d'une plinthe démontable de l'invention,
- la figure 12 représente la mise en oeuvre de l'outil de démontage de la figure 8 sur la plinthe de la figure 11, et
- la figure 13 une perspective d'une autre variante de réalisation d'une plinthe démontable de l'invention.

### Description détaillée

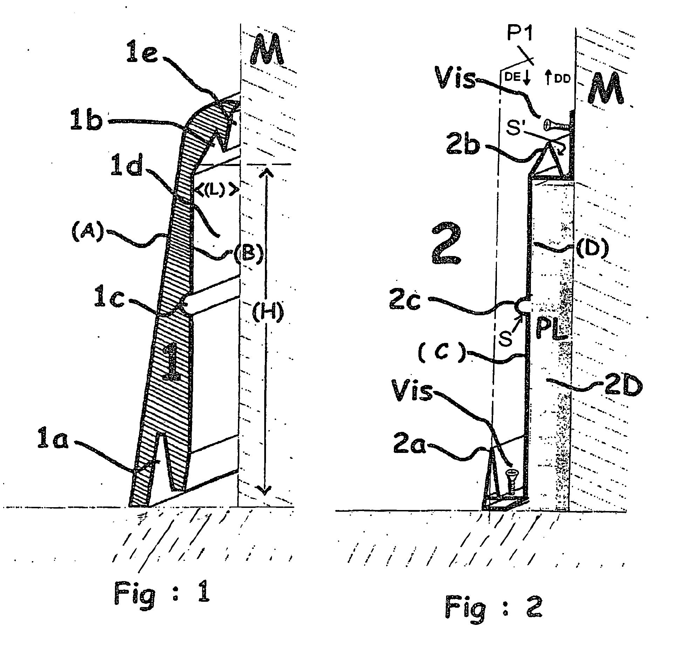

En référence à la figure 1, l'élément décoratif 1 de la plinthe est une pièce linéaire usinée qui est de préférence constituée en bois ou similaire, et qui présente une première face A formant la face apparente de l'élément décoratif 1 et une seconde face B destinée à être fixée sur la face C de l'un ou l'autre des trois supports des figures 2, 3 et 4.

L'élément décoratif commun 1 comporte un premier espace rectangulaire 1d suffisant en largeur (L) et en hauteur (H) entre le dos de l'élément décoratif 1 et le mur (M) pour recevoir l'un des trois supports (figure 2, 3 et 4).

L'élément décoratif 1 comporte une rainure longitudinale 1a, en l'espèce de section trapézoïdale, réalisée à la base de l'élément décoratif 1 et apte à coopérer avec un tenon longitudinal inférieur 2a de chacun des trois supports (figures 2 , 3 et 4), en sorte de constituer un moyen de jonction par emboîtement et de serrage.

L'élément décoratif 1 comporte une rainure longitudinale 1b, de forme triangulaire, qui est située sur la partie haute et horizontale de l'élément décoratif 1, et qui est apte à coopérer avec un ergot longitudinal 2b de chacun des trois supports (figures 2, 3 et 4) pour constituer un moyen de verrouillage.

L'élément décoratif 1 comporte une rainure longitudinale 1c, qui dans l'exemple particulier illustré est en forme de demi rond, et qui est située sensiblement au centre de l'élément décoratif 1. Cette rainure 1c est apte à coopérer avec un ergot 2c de chacun des trois supports (figures 2, 3 et 4) pour constituer un moyen de stabilisation et de préférence de contre-poussée.

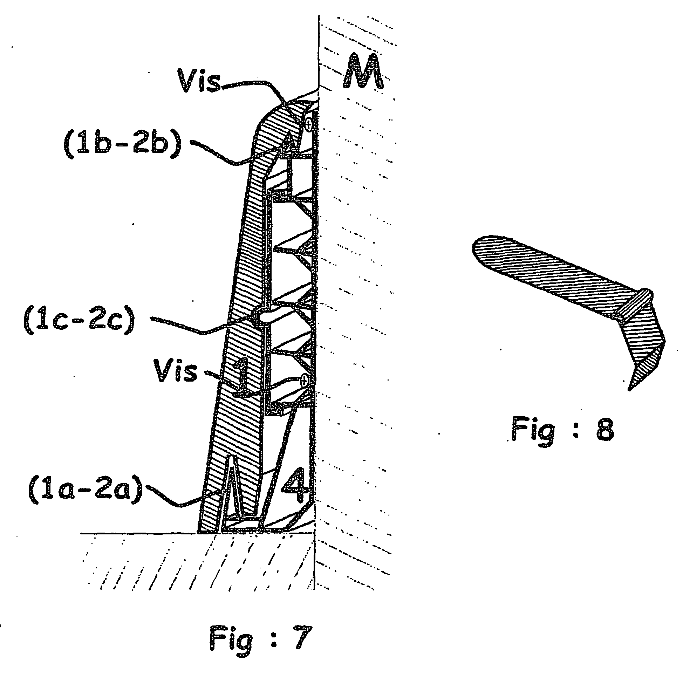

L'élément décoratif 1 comporte de préférence un deuxième espace 1e suffisant pour recevoir l'outil spécifique de la figure 8 et également le cas échéant les têtes de vis de fixation du support de plinthe (figures 2, 3 et 4).

En référence à la figure 2, le support 2 de la plinthe est de préférence en plastique type PVC ou similaire, et permet de dissimuler des plinthes d'origine (PL). A cet effet, le support 2 comporte un espace rectangulaire 2d qui est suffisant pour recouvrir les plinthes d'origine (PL).

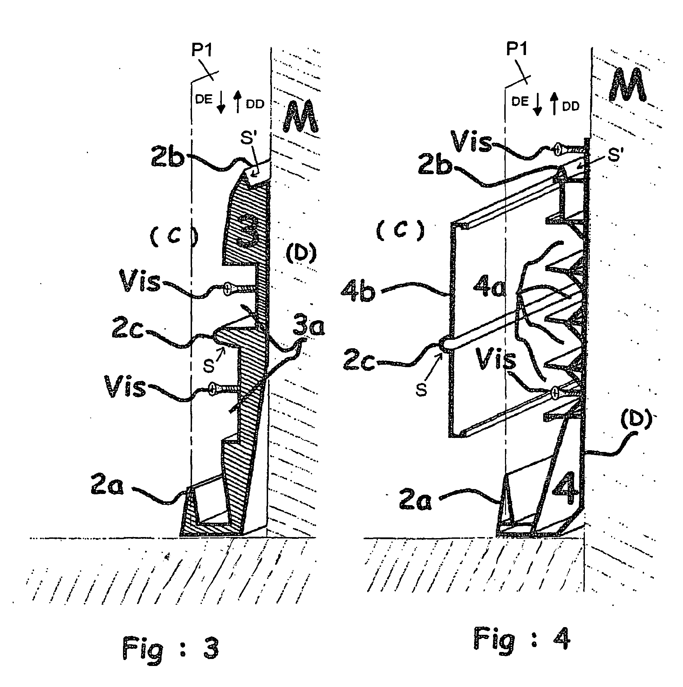

En référence à la figure 3, le support 3 de la plinthe est de préférence en bois ou similaire, et permet de dissimuler des fils et/ou des câbles domotiques ne nécessitant pas l'obtention de normes spécifiques. A cet effet, le support 3 comporte deux rainures 3a de sections suffisantes pour recevoir les fils et/ou les câbles domotiques.

En référence à la figure 4, le support 4 de la plinthe est de préférence en matière plastique type PVC ou similaire, et permet de dissimuler des fils électriques nécessitant obligatoirement des normes spécifiques. Le support 4 comporte un ensemble 4a de quatre logements permettant de recevoir des fils et/ou des câbles électriques. Cet ensemble 4a est recouvert par un couvercle spécifique 4b de façon à pouvoir obtenir les normes spécifiques obligatoires aux passages de fils électriques.

Les trois supports 2, 3 et 4 présentent également, une première face D, dite dorsale, destinée à être fixée au bas des plinthes d'origine (PL) ou au bas des murs (M), et une seconde face C dite frontale destinée à être recouverte par l'élément décoratif commun 1.

Chaque support 2, 3 ou 4 comporte également :
- un tenon longitudinal 2a, de forme trapézoïdale, situé au bas du support 2, 3 ou 4, et apte à coopérer avec la rainure trapézoïdale inférieure 1a de l'élément décoratif 1, afin de constituer un moyen de jonction par emboîtement et de serrage ;
- un premier ergot de forme triangulaire 2b situé sur la partie haute et horizontale de chaque élément support 2, 3 ou 4, et apte à coopérer avec la rainure triangulaire supérieure 1b de l'élément décoratif 1, afin de constituer un moyen de verrouillage élastique,
- et un deuxième ergot 2c, en forme de demi-rond, - qui est situé au centre respectivement des deux premiers support 2 et 3, ou du couvercle 4b du troisième support 4 - , et qui est apte à coopérer avec la rainure 1c de l'élément décoratif 1.

Le deuxième ergot 2c forme une butée longitudinale, dont la dimension est de préférence légèrement supérieure à la profondeur de la rainure 1c de l'élément décoratif 1, en sorte d'exercer sur l'élément décoratif 1 une contre-poussée suffisante pour créer une tension entre élément décoratif 1 et le support 2, 3 ou 4.

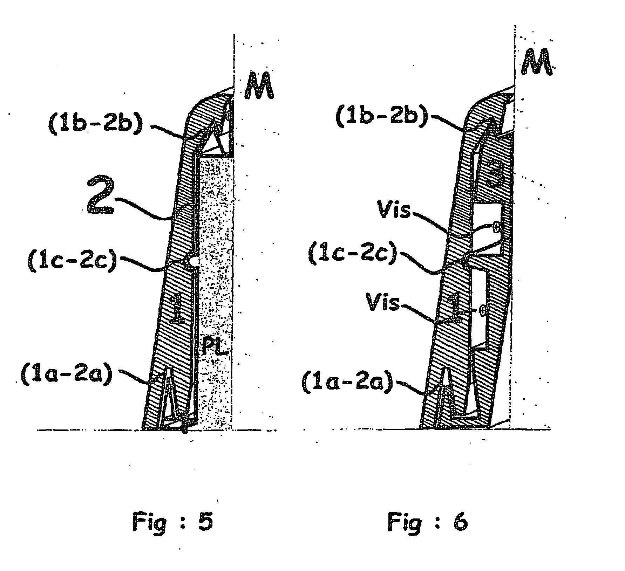

En référence aux figures 5, 6 et 7, le mode d'utilisation de la plinthe et l'assemblage de l'élément décoratif commun 1 avec respectivement chacun des trois éléments support 2, 3 et 4 consiste:
- à fixer le support 2, 3 ou 4, en le collant ou/et le vissant, au bas des murs (M) ou au bas des plinthes d'origine (PL), ce support étant choisi en fonction du type de fonction souhaité puis,
- à recouvrir l'élément support 2, 3 ou 4, une fois le cas échant que les fils et/ câbles domotiques et/ou électriques ont été passés, avec l'élément décoratif 1, de façon à obtenir selon l'invention un esthétique identique dans les pièces de l'habitat ; dans le cas de la variante de la figure 4, le couvercle 4b du support 4 est préalablement mis en place.

Le recouvrement des supports 2, 3 ou 4 par l'élément décoratif commun 1 s'effectue successivement en deux temps :
- premièrement, en emboîtant le tenon trapézoïdal 2a situé au bas de l'élément support 2, 3 ou 4 dans la rainure trapézoïdale 1a de l'élément décoratif commun 1, ce qui permet de réaliser une jonction et un serrage dans le bas de la plinthe puis,
- deuxièmement, en effectuant une poussée horizontale de l'élément décoratif commun 1 vers le support 2, 3 ou 4 de manière à emboîter élastiquement le premier ergot triangulaire 2b dans la rainure triangulaire 1b de l'élément décoratif commun 1, ce qui permet de constituer un verrouillage de l'élément décoratif commun 1 sur le support 2, 3 ou 4.

Au cours de ces opérations, le deuxième ergot 2c, en forme de demi-rond, est introduit dans la rainure 1c de l'élément décoratif 1, et permet ainsi de bloquer en translation l'élément décoratif 1 dans son plan vertical d'emboîtement. Selon une caractéristique préférentielle, la dimension de l'ergot 2c étant légèrement supérieure à la profondeur de la rainure 1c de l'élément décoratif 1, une fois l'élément décoratif 1 emboîté et verrouillé sur le support 2, 3 ou 4, l'ergot 2c exerce avantageusement, sur l'élément décoratif 1, une contre-poussée qui est suffisante pour créer une tension permettant de serrer l'élément décoratif 1 contre le support 2, 3 ou 4, par utilisation de la flexibilité naturelle de l'élément décoratif 1. L'ergot 2c permet ainsi de stabiliser et d'empêcher l'élément décoratif 1 de se désolidariser accidentellement des supports 2, 3 ou 4.

En référence à la figure 8, l'outil spécifique, constitué en métal ou similaire, permet le démontage de l'élément décoratif 1 par un emboîtement de celui-ci sur le haut de l'élément décoratif 1, entre l'élément décoratif commun 1 et le mur (M), puis en exerçant une poussée de l'outil vers le mur (M) afin de créer un effet levier qui déboîtera automatiquement l'élément décoratif commun 1 de l'élément support 2, 3 ou 4 de part la flexibilité naturelle de l'élément décoratif commun 1.

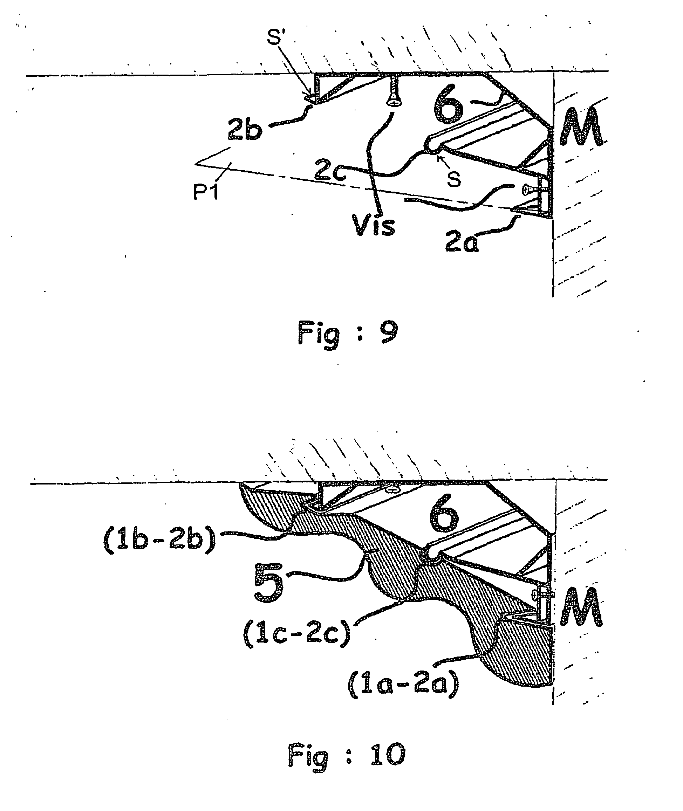

On a représenté sur les figures 9 et 10, une variante de la présente invention permettant d'adapter les avantages et les principes de fonctionnement précités à la réalisation d'une moulure démontable entre un plafond et le haut d'un mur. Dans cette variante, la moulure comporte un élément décoratif spécifique 5 et un élément support spécifique 6 correspondant à la forme de l'angle de 90° existant entre le mur (M) et le plafond (PLF).

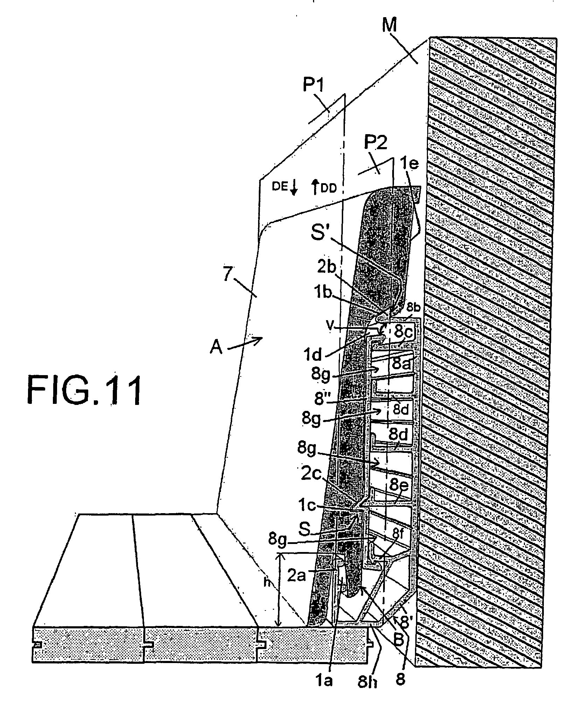

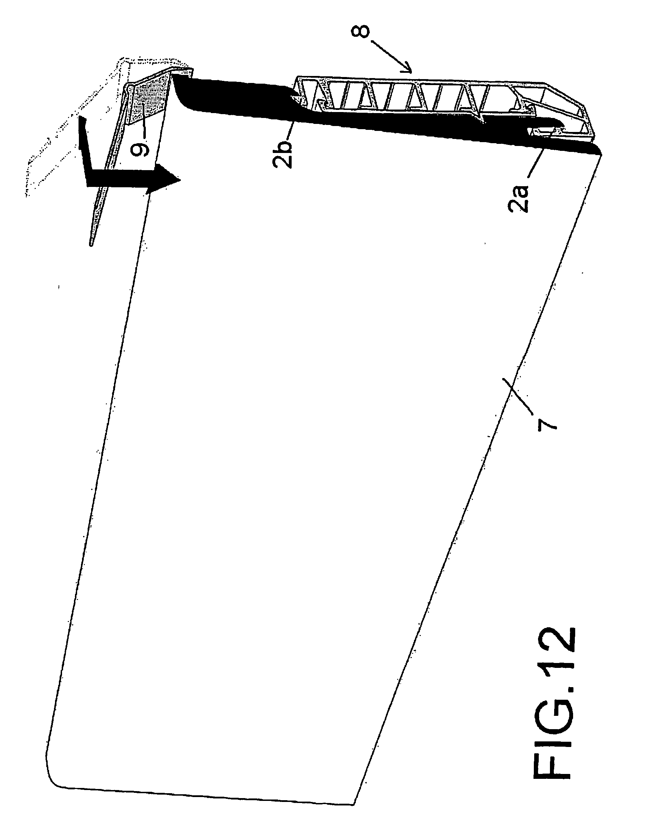

On a représenté sur les figures 11 et 12, une autre variante de réalisation d'une plinthe démontable qui est conforme à l'invention, et qui dans l'exemple particulier illustré permet de remplir une fonction de cache-fils.

En référence à la figure 11, la plinthe comporte :
- un élément décoratif 7,
- un support 8 en deux parties : un élément support 8' et un couvercle amovible 8".

L'élément support 8' est constitué d'un profilé par exemple en matière plastique ou en métal, et peut être réalisé par extrusion ou moulage.

L'élément support 8' comporte :
- une paroi arrière 8a, qui définit une face de fixation sensiblement plane, et qui est destinée à être fixée par tout moyen (collage, vissage,..) contre la partie basse d'une structure porteuse, tel qu'un mur (M),
- six branches longitudinales 8b, 8d, 8e, et 8f, qui s'étendent sensiblement perpendiculairement à la paroi arrière 8a,
- une base 8h comportant un élément de jonction par emboîtement 2a de type mâle, qui est désigné ci-après tenon, et qui est déporté vers l'avant par rapport à la paroi arrière 8a.

De manière similaire aux variantes de réalisation des figures 2, 3, 4 et 9, le tenon 2a définit un plan d'emboîtement/déboîtement P1. Dans l'exemple de la figure 11, une fois l'élément support 8' fixé contre le mur M, ce plan d'emboîtement/déboîtement P1 est sensiblement vertical.

La branche supérieure 8b de l'élément support 8' se termine à son extrémité par un ergot de verrouillage 2b. Cet ergot de verrouillage 2b comporte une paroi arrière sensiblement plane, formant une butée de verrouillage S'. Cette butée S' définit un plan de verrouillage P2 qui dans l'exemple particulier illustré est sensiblement parallèle au plan d'emboîtement/déboîtement P1, et est décalé vers la partie arrière du support 8 par rapport à ce plan P1.

La jonction de la branche 8b avec la paroi arrière 8a présente une légère flexibilité autorisant un léger pivotement élastique de la branche 8b dans un plan transversal à la paroi arrière 8a (figure 11 / Double flèche V). Cette élasticité permet un léger déplacement de l'ergot 2b, lors des opérations de verrouillage/déverrouillage de l'élément décoratif 7. La branche 8b et l'ergot 2b forment ainsi un élément de verrouillage qui est déformable élastiquement en sorte de faciliter le positionnement de sa butée de verrouillage S' dans la rainure supérieure 1b.

Les branches 8c, 8d, 8f délimitent entre-elle quatre logements longitudinaux 8g, permettant en utilisation le passage de câble ou fils électriques ou domotiques. L'extrémité libre des branches 8c et 8f de l'élément support 8' est en outre conformée en sorte de permettre l'encliquetage élastique du couvercle 8" sur l'élément support 8'. Une fois monté, le couvercle 8", ferme en façade avant les logements 8g.

Le couvercle 8" comporte un ergot longitudinal 2c, qui dans l'exemple illustré présente une section sensiblement triangulaire. La paroi inférieure de cet ergot 2c forme une butée S. Lorsque le couvercle 8" est monté sur l'élément support 8', la butée S est orientée transversalement au plan d'emboîtement/déboîtement P1. De préférence tel que cela est illustré sur la variante de la figure 11, la butée S forme un plan sensiblement perpendiculaire au plan d'emboîtement/déboîtement P1.

L'élément décoratif 7 est une pièce linéaire, qui de préférence a été usinée par enlèvement de matière. De préférence, l'élément décoratif 7 est réalisé dans un matériau usinable lui conférant un aspect esthétique supérieur à un élément en plastique. L'élément décoratif 7 est par exemple en bois, ou à base de fibres de bois, ou encore dans un matériau synthétique tel que celui commercialisé sous la marque CORIAN®. L'élément décoratif 7 peut également être un matériau revêtu d'une feuille ou plaquage externe lui conférant un aspect visuel amélioré.

Cet élément décoratif 7 comporte en face arrière B :
- une rainure de blocage longitudinale 1c qui est de forme complémentaire à l'ergot de blocage 2c du couvercle 8" ;
- un évidement principal 1d qui se termine en partie supérieure par une rainure longitudinale de verrouillage 1b.

Egalement, la base de l'élément décoratif 7 comporte une rainure longitudinale inférieure 1a, qui dans l'exemple illustré présente une section trapézoïdale.

Le montage de l'élément décoratif 7 sur le support 8 est réalisé de la manière suivante.

On considère au préalable que l'élément support 8' est fixé au mur M et que le couvercle amovible 8" est monté sur l'élément support 8', tel que cela est illustré sur la figure 11.

On commence par emboîter la base de l'élément décoratif 7 sur le support 8. A cet effet, on positionne la rainure 1a au droit du tenon 2a, et on translate l'élément décoratif 7 en direction de la base du support 8, sensiblement parallèlement au plan d'emboîtement/déboîtement P1 (figure 11/ direction d'emboîtement DE) en sorte de faire pénétrer le tenon 2a dans la rainure 1 a. De préférence, la section trapézoïdale de la rainure 1a permet en outre un serrage de l'élément décoratif sur le tenon 2a.

La profondeur (h) de la rainure 1a, la rigidité de l'élément décoratif 7 au niveau de la rainure 2a, et la rigidité du tenon 2a sont suffisantes, pour qu'une fois l'élément décoratif emboîté sur le tenon 1 a, il peut être déboîté du support 8 uniquement par une translation inverse dans le plan d'emboîtement/déboîtement P1 (figure 11/ direction de déboîtement DE). En revanche, la profondeur (h) de la rainure 1a est suffisamment faible pour que la fixation de l'élément décoratif sur le tenon 2a soit réalisée en partie basse de l'élément décoratif. En pratique, la hauteur (h) de la rainure 1a est de préférence inférieure à 1/3 de la hauteur de l'élément décoratif 7, et est dans l'exemple illustré inférieure à 1/5 de la hauteur de l'élément décoratif 7.

Lors de l'opération d'emboîtement précitée, l'ergot 2c vient se positionner au droit de rainure 1c de l'élément décoratif 7, et est engagé au moins partiellement dans la rainure 1 c.

Une fois la base de l'élément décoratif 7 emboîtée sur le tenon 2a de la base du support 8, on verrouille élastiquement la partie supérieure de l'élément décoratif 7, en positionnant l'ergot de verrouillage 2b dans la rainure supérieure 1b. Ce verrouillage est réalisé en poussant la partie haute de l'élément décoratif 1 en direction du support 8, transversalement au plan d'emboîtement/déboîtement P1, grâce à la légère flexibilité naturelle de l'élément décoratif 1 et/ou grâce à un léger jeu d'emboîtement au niveau de la rainure inférieure 1a. Lors de ce déplacement, d'une part l'ergot de blocage 2c se positionne correctement à l'intérieur de la rainure de blocage 1c, et d'autre part l'ergot de verrouillage 2b est repoussé légèrement vers le bas par l'élément décoratif 7, de manière suffisante pour faire pénétrer l'ergot de verrouillage 2b dans la rainure 1b.

L'ergot de verrouillage 2b, de part la flexibilité de sa branche 8b, reprend automatiquement en fin d'opération sa position initiale de repos (figure 11). Dans cette position, la butée S' de l'ergot 2b coopère avec la rainure 1b et permet de verrouiller en position l'élément décoratif 7 dans le plan de verrouillage P2. L'ergot 2b en coopération avec la rainure 1b permet ainsi d'éviter que la partie supérieure de l'élément décoratif 7 ne se déplace accidentellement transversalement au plan de verrouillage P2 et dans la direction du plan d'emboîtement/déboîtement P1.

L'élément décoratif 7 est ainsi parfaitement immobilisé sur le support 8, en étant maintenu à la fois au niveau de sa base et au niveau de sa partie supérieure, et on évite les risques de déboîtement intempestif.

L'ergot de blocage 2c a pour fonction principale de former une butée S, qui en coopération avec la rainure longitudinale 1c, permet de bloquer en translation l'élément décoratif 7 dans sa direction de déboîtement DD (c'est-à-dire sensiblement verticalement et vers le haut dans le cas de la figure 11).

Dans une variante de réalisation de l'invention, l'ergot 2c peut également être légèrement surdimensionné par rapport à la profondeur de la rainure 2c, en sorte d'exercer une fonction supplémentaire de verrouillage, en appliquant sur l'élément décoratif 7 une force de contre-poussée transversale au plan de verrouillage P2, ce qui contribue à renforcer le verrouillage de la partie haute de l'élément décoratif 7 par l'ergot de verrouillage 1 b.

En référence à la figure 12, le démontage de l'élément décoratif 1 est réalisé de la manière suivante.

On utilise par exemple (mais non nécessairement) un outil spécifique de démontage 9. On glisse une partie de cet outil 9 entre la partie supérieure de l'élément décoratif et le mur M (position de l'outil 9 illustrée en trait plein sur la figure 12). Puis on fait pivoter l'outil 9 en direction du mur (position en pointillés de la figure 12) en prenant appui sur le mur (M). La contrainte exercée par l'outil 9 sur la partie haute de l'élément décoratif permet d'écarter en force du plan de verrouillage P2 la partie haute de l'élément décoratif 7, et de repousser légèrement vers le bas l'ergot 2b de verrouillage élastique, jusqu'à ce que la rainure de verrouillage 1b soit dégagée de l'ergot de verrouillage 2b. Le cas échéant, et selon une autre méthode de déverrouillage, qui peut éventuellement se combiner avec l'utilisation de l'outil 9 ou équivalent, il est également possible de déverrouiller la partie haute de l'élément décoratif 7, en glissant une lame ou équivalent entre l'élément décoratif 1 et le mur M, en sorte d'exercer directement une légère pression verticale sur l'ergot de verrouillage 2b pour le dégager de la rainure 1 b.

Une fois que la partie haute de l'élément décoratif 7 est déverrouillée (la rainure supérieure 1b n'étant plus engagée et bloquée par l'ergot 2b), il suffit de déboîter la base de l'élément décoratif 7 en le translatant vers le haut (figure 11/ direction de déboîtement DD) sensiblement selon le plan d'emboîtement/déboîtement P1.

Dans une autre variante de réalisation, le support 8 pourrait être constitué d'un seul élément support, de manière similaire aux variantes des figures 2 et 3. Dans ce cas l'ergot longitudinal de blocage 2c est réalisé directement sur cet unique élément support.

Dans les variantes illustrées, le tenon 2a, l'ergot de verrouillage 2b, et l'ergot de blocage 2c s'étendent longitudinalement sensiblement sur toute la longueur du support. Dans une autre variante, il est envisageable de les remplacer par plusieurs éléments successifs de plus faible longueur, répartis sur et espacés selon la longueur du support.

Dans les variantes de réalisation des figures 2, 3 et 4, l'ergot de verrouillage 2b pourrait être remplacé par un ergot de verrouillage du même type que celui décrit pour la variantes des figures 11 et 12, c'est-à-dire un élément de verrouillage déformable élastiquement en sorte de faciliter le positionnement de la buté S' dans la rainure supérieure 1b.

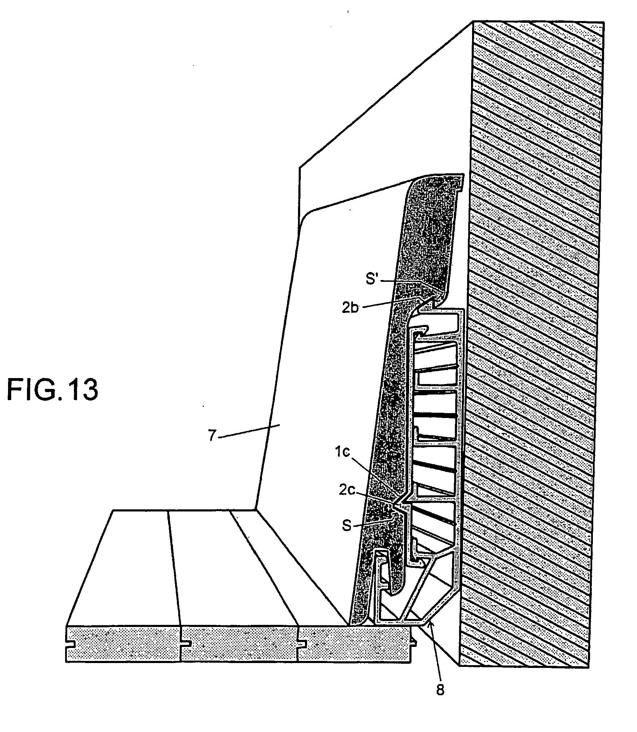

On représenté sur la figure 13, une autre variante de réalisation d'une plinthe démontable de l'invention, qui se différencie de la variante des figures 11 et 12, uniquement par la forme en section de l'ergot de blocage 2c et de la rainure 1 c correspondante.

## Revendications

1. Dispositif de finition démontable comportant un support (2 ; 3 ; 4 ; 6 ; 8) et un élément décoratif linéaire (1 ; 5 ; 7) , qui est conçu pour être emboîté de manière amovible sur le support selon un plan d'emboîtement/déboîtement (P1), et qui une fois emboîté sur le support forme la façade apparente du dispositif, le support comportant une butée (S) qui est transversale au plan d'emboîtement/déboîtement (P1), et qui est destinée à coopérer avec une rainure longitudinale (1c) de l'élément décoratif, en sorte de bloquer en translation l'élément décoratif dans sa direction de déboîtement (DD), **caractérisé en ce que** le support comporte en outre :
- au niveau de sa base, au moins un élément de jonction par emboîtement de type mâle (2a),
- en partie supérieure, au moins un élément de verrouillage (2b) formant une butée (S'),
**en ce que** l'élément décoratif comporte :
- au niveau de sa base, une rainure inférieure longitudinale (1a) conçue pour coopérer avec chaque élément de jonction par emboîtement (2a), ladite rainure inférieure (1a) et chaque élément de jonction par emboîtement (2a) permettant un emboîtement/déboîtement de la base de l'élément décoratif sur le support uniquement par déplacement en translation de l'élément décoratif sensiblement selon le plan d'emboîtement/déboîtement (P1),
- en face arrière, un évidement (1d) comportant dans sa partie supérieure une rainure supérieure longitudinale (1b), qui présente la même orientation que la rainure intérieure (1a), et qui est conçue pour coopérer avec la butée (S') de chaque élément de verrouillage, ladite butée (S') de l'élément de verrouillage étant apte à être positionnée dans la rainure supérieure (1b) par déplacement de l'élément décoratif transversalement au plan d'emboîtement/déboîtement (P1).

2. Dispositif selon la revendication 1 **caractérisé en ce que** l'élément de jonction par emboîtement (2a) du support et la rainure inférieure (1a) de l'élément décoratif sont conçus pour obtenir un emboîtement avec serrage.

3. Dispositif selon la revendication 1 ou 2 **caractérisé en ce que** la butée (S') de l'élément de verrouillage définit un plan de verrouillage (P2) qui est décalé par rapport au plan d'emboîtement/déboîtement (P1) et qui est sensiblement parallèle au plan d'emboîtement/déboîtement (P1).

4. Dispositif selon l'une des revendications 1 à 3 **caractérisé en ce que** l'élément de verrouillage (8b/2b) est déformable élastiquement en sorte de faciliter le positionnement de sa butée (S') dans la rainure supérieure (1 b)

5. Dispositif de finition démontable selon l'une des revendications 1 à 4 **caractérisé en ce que** le support (4 ; 8) comporte un ou plusieurs logements (4a ; 8g) permettant le passage de câbles ou fils.

6. Dispositif selon l'une des revendications 1 à 5 **caractérisé en ce que** l'élément décoratif est constitué d'une pièce qui a été usinée par enlèvement de matière.

7. Dispositif selon la revendication 6 **caractérisé en ce que** l'élément décoratif est en bois ou à base de fibres de bois.

8. Dispositif selon l'une des revendications 1 à 7 **caractérisé en ce qu'**il constitue une plinthe.

9. Dispositif selon l'une des revendications 1 à 7 **caractérisé en ce qu'**il constitue une moulure pour plafond.

## Claims

1. A detachable finishing device comprising a support (2; 3; 4; 6; 8) and a linear decorative member (1; 5; 7), being adapted to be removably engaged into the support according to an engagement/disengagement plane (P1), and forming, once engaged into the support, the apparent front of the device, said support comprising an abutment (S) being transversal to the engagement/disengagement plane (P1) and being adapted to cooperate with a longitudinal groove (1c) of the decorative member, so as to lock in a translatory motion the decorative member along the disengagement direction (DD) thereof, **characterized in that** the support further comprises :
- at the base level thereof, at least one male-type engaging joint member (2a),
- in the upper part thereof, at least one locking member (2b) forming an abutment (S'),
**in that** the decorative member comprises :
- at the base level thereof, a longitudinal lower groove (1a) adapted for cooperating with each engaging joint member (2a), said lower groove (1a) and each engaging joint member (2a) providing for an engagement/disengagement of the decorative member base on the support only through a translatory motion of the decorative member substantially according to the engagement/disengagement plane (P1),
- on the back side thereof, a recess (1d) comprising, in the upper part thereof, a longitudinal upper groove (1b), with the same orientation as the lower groove (1a), and being adapted for cooperating with the abutment (S') of each locking member, said abutment (S') of the locking member being able to be positioned in the upper groove (1b) through a motion of the decorative member crosswise to the engaging/disengaging plane (P1).

2. A device according to claim 1, **characterized in that** the engaging joint member (2a) of the support and the lower groove (1a) of the decorative member are adapted for providing a clamping engagement.

3. A device according to claim 1 or 2, **characterized in that** the abutment (S') of the locking member defines a locking plane (P2) being offset relative to the engagement/disengagement plane (P1) and being substantially parallel to the engagement/disengagement plane (P1).

4. A device according to any of claims 1 to 3, **characterized in that** the locking member (8b/2b) is elastically distortable so as to make positioning of the abutment (S') thereof easier in the upper groove (1b).

5. A detachable finishing device according to any of claims 1 to 4, **characterized in that** the support (4; 8) comprises one or more housings (4a; 8g) so as to allow cables or wires for passing through.

6. A device according to one of claims 1 to 5, **characterized in that** the decorative member is made of one piece machined through material removal.

7. A device according to claim 6, **characterized in that** the decorative member is made of wood or based on wood fibres.

8. A device according to any of claims 1 to 7, **characterized in that** it forms a skirting.

9. A device according to any of claims 1 to 7, **characterized in that** it forms a ceiling moulding.

## Patentansprüche

1. Abmontierbare Deckvorrichtung, welche einen tragenden Teil (2; 3; 4; 6; 8) und ein lineares Dekorelement (1; 5; 7) umfasst, das so ausgebildet ist, dass es auf den tragenden Teil entlang einer Einführungs-/Zerlegungsebene (P1) in einer lösbaren Weise eingesetzt werden kann und das - einmal auf den tragenden Teil eingesetzt - die sichtbare Vorderseite der Vorrichtung bildet, wobei der tragende Teil einen Anschlag (S) aufweist, der zur Einführungs-/Zerlegungsebene (P1) quer verläuft und dazu bestimmt ist, mit einer Längsnut (1 c) des Dekorelementes zusammenzuwirken, um das Dekorelement gegen ein Verschieben in seine Zerlegungsrichtung (DD) zu blockieren,
**dadurch gekennzeichnet, dass**
der tragende Teil unter anderem aufweist:
- in Höhe seiner Basis wenigstens ein Element zum Verbinden durch Eingreifen vom männlichen Typ (2a),
- im oberen Bereich wenigstens ein Verriegelungs-Element (2b), das einen Anschlag (S') bildet,
das Dekorelement aufweist:
- in Höhe seiner Basis eine untere Längsnut (1a), ausgebildet zum Zusammenwirken mit jedem durch Einführen oder Eingreifen wirksamen Verbindungselement (2a), wobei die untere Längsnut (1 a) und jedes durch Einführen wirksame Verbindungselement (2a) ein Einführen oder Zerlegen der Basis des Dekorelements auf den tragenden Teil allein durch eine Translations-Verschiebung des Dekorelements im Wesentlichen in der Ebene (P1) der Einführung und/oder Zerlegung gestattet,
- auf der Rückseite eine Ausnehmung (1 d), die in ihrem oberen Bereich eine obere Längsnut (1 b) aufweist, welche die gleiche Orientierung wie die untere Längsnut (1 a) aufweist, und die so ausgestaltet ist, dass sie mit dem Anschlag (S') jedes Verriegelungs-Elementes zusammenwirkt, wobei der Anschlag (S') des Verriegelungs-Elementes tauglich ist, in die/der obere(n) Längsnut (1 b) angeordnet zu werden, und zwar durch Verlagerung des Dekorelementes quer zur Ebene (P1) der Einführung und/oder Zerlegung.

2. Vorrichtung nach Anspruch 1, **dadurch gekennzeichnet, dass** das Element (2a) zum Verbinden durch Eingreifen des tragenden Teils und die untere Nut (1 a) des Dekorelements so ausgebildet sind, dass durch sie ein Eingriff mit Klemmwirkung erhalten wird.

3. Vorrichtung nach Anspruch 1 oder 2, **dadurch gekennzeichnet, dass** der Anschlag (S') des Verriegelungselementes eine Verriegelungs-Ebene (P2) definiert, die gegenüber der Ebene (P1) der Einführung und/oder Zerlegung versetzt ist und die im Wesentlichen parallel zu der Ebene (P1) der Einführung und/oder Zerlegung verläuft.

4. Vorrichtung nach einem der Ansprüche 1 bis 3, **dadurch gekennzeichnet, dass** das Verriegelungselement (8b/2b) so elastisch verformbar (ausgebildet) ist, dass ein Positionieren seines Anschlags (S') in der oberen Nut (1 b) erleichtert wird.

5. Abmontierbare Deckvorrichtung nach einem der Ansprüche 1 bis 4, **dadurch gekennzeichnet, dass** der tragende Teil (4;8) eine oder mehrere Kammern(4a;8g) aufweist, welche die Durchführung von Kabeln oder Drähten gestatten.

6. Vorrichtung nach einem der Ansprüche 1 bis 5, **dadurch gekennzeichnet, dass** das Dekorelement aus einem Stück gebildet ist, das gefertigt ist durch Material-Abtragung.

7. Vorrichtung nach Anspruch 6, **dadurch gekennzeichnet, dass** das Dekorelement aus Holz oder auf der Basis von Holzfasern besteht.

8. Vorrichtung nach einem der Ansprüche 1 bis 7, **dadurch gekennzeichnet, dass** sie eine Fuß- oder Wandleiste bildet.

9. Vorrichtung nach einem der Ansprüche 1 bis 7, **dadurch gekennzeichnet, dass** sie ein (Zier-)Profil für die Decke bildet.
